**Europäisches Patentamt**

**European Patent Office**

**Office européen des brevets**

(19)

(11) Veröffentlichungsnummer : **0 089 311**
**B1**

(12)

# EUROPÄISCHE PATENTSCHRIFT

(45) Veröffentlichungstag der Patentschrift :
20.01.88

(51) Int. Cl.⁴ : **F 16 F   7/10**, B 23 Q  11/00

(21) Anmeldenummer : 83810093.1

(22) Anmeldetag : 07.03.83

(54) Schwingungstilger und Verwendung desselben.

(30) Priorität : 11.03.82 CH 1506/82

(43) Veröffentlichungstag der Anmeldung :
21.09.83 Patentblatt 83/38

(45) Bekanntmachung des Hinweises auf die Patenterteilung : 20.01.88 Patentblatt 88/03

(84) Benannte Vertragsstaaten :
AT BE CH DE FR GB IT LI LU NL SE

(56) Entgegenhaltungen :
FR-A- 2 016 698
FR-A- 2 149 919
FR-A- 2 468 036
GB-A- 1 421 032
US-A- 2 736 393

(73) Patentinhaber : SIG Schweizerische Industrie-Gesellschaft

CH-8212 Neuhausen am Rheinfall (CH)

(72) Erfinder : Steiner, Heinz
Im Gärtli
CH-8211 Dörflingen (CH)
Erfinder : Knoll, Fritz
Konradingasse 21
D-7750 Konstanz (DE)

(74) Vertreter : White, William et al
PATENTANWALTS-BUREAU ISLER AG Postfach 6940
Walchestrasse 23
CH-8023 Zürich (CH)

## Beschreibung

Die vorliegende Erfindung betrifft einen Schwingungstilger sowie eine Verwendung desselben.

Schwingungsdämpfer für die Verminderung von Vibrationsenergie bei Schlag- und Bohrwerkzeugen sind bekannt. Ein Beispiel dafür ist in der GB-A-1 421 032 beschrieben. In einer Bohrung von beispielsweise Bohrstangen oder im Hohlraum von einem an der betreffenden Maschine oder am Gerät zu befestigenden Gehäuse ist ein Dämpfungselement mittels Federelementen an der Wand der Bohrung oder des Hohlraums abgestützt, derart, dass diese sowohl das Dämpfungselement als auch sich gegenüberliegende Endwände der Bohrung oder des Hohlraums berühren. Darüber hinaus sind noch Mittel zur axialen Kompression der Federelemente in einstellbarer Weise vorhanden, um deren Steifheit zu verändern. Wenigstens eine der sich gegenüberliegenden Endwände oder die Oberfläche des unkomprimierten Federelementes ist konisch ausgebildet und bildet ohne eine Kompressionskraft einen keilförmigen Spalt.

Durch diese Formgebung sollen sowohl die Dämpfungskraft als such die Federkraft einstellbar sein. Während die Wirksamkeit einer solchen theoretisch betrachtet unbestritten ist, führt die technische Ausführung zu etwelchen Schwierigkeiten, indem bei Verwendung eines Kautschuks für die Federelemente eine Reibung zwischen der Prallfläche und der Oberfläche des Federelementes entsteht, welche zu Verschleiss des Federelementes führt. Diese Reibung könnte durch Schmierung zumindest Vermindert werden, was bei gewissen Elastomeren nicht zulässig ist. Anderseits würde jedoch Polybutadien ein geeignetes Material bezüglich dem dynamischen Verformungsverhalten darstellen, es ist jedoch nicht ölresistent.

In der FR-A-2 149 919 ist eine Dämpfer-Anordnung beschrieben, bei der eine Dämpfermasse in einem Gehäuse durch Rollringe an der Wand eines zylindrischen Hohlraumes geführt ist. Beidseits ist die axiale Bewegung durch Prallringe begrenzt. Die Uebertragung der Schwingungsenergie erfolgt vom Gehäuse über die Rollringe auf die Dämpfermasse, wobei ein Teil der Energie infolge innerer Reibung in den Rollringen absorbiert wird. Die Dämpfermasse schwingt durch diesen Antrieb im Gegentakt zum Gehäuse wodurch ein weiterer Energieanteil kompensiert werden kann. Durch die Rollringe bedingt ergibt sich eine Energieumwandlung, so dass es sich um eine Dämpfung der Schwingung handelt.

Ueberdies können mit einer derartigen Anordnung nur Schwingungen über etwa 30 Hz gedämpft werden. Bei tiefer frequenten Schwingungen, wie sie bei pneumatisch betriebenen Hämmern üblich sind, genügt eine blosse Dämpfung nicht, sondern die Schwingungen müssen getilgt werden.

Demgegenüber soll durch die Erfindung ein Schwingungstilger geschaffen werden, bei dem die Tilgungswirkung verbessert ist, und bei dem die Federelemente gegen chemische und mechanische Einflüsse geschützt sind.

Erfindungsgemäss wird dies durch die Merkmale des unabhängigen Patentanspruchs 1 erreicht. Eine besonders vorteilhafte Verwendung dieses Schwingungstilgers ist im Nebenanspruch 13 gekennzeichnet.

Dieser Schwingungstilger bildet ein Feder-Masse-System, bei dem sich die Eigenschwingung an die Erregerschwingung anpassen kann. Die als Federn wirkenden Teile bewirken eine überproportionale Kraft-Weg-Charakteristik.

Durch Verwendung eines weichelastischen Materials für die Federelemente, das eine hohe Rückprallelastizität und/oder eine möglichst geringe dynamische Eigendämpfung aufweist, kann ein grosser Energieanteil auf den Schwingungskörper übertragen werden. Ein solches Material ist Kautschuk bzw. ein Elastomer wie Polybutadien.

Zur Verminderung der Reibung zwischen dem Federelement und der Prallfläche einerseits und zwischen dem Federelement und der Tilgermasse anderseits kann eine Umhüllung vorgesehen sein, die gegen mechanische und/oder chemische Einflüsse einen Schutz für die Federelemente bietet, so dass eine Schmierung zur Reibungsverminderung ermöglicht werden kann. Als geeignetes Material für die Umhüllung kann Chloropren-Kautschuk vorgesehen sein. Vorzugsweise misst die Wandstärke der Umhüllung weniger als 10 % der Dicke des Federelementes in Schwingungsrichtung.

Diese Umhüllung kann ihrerseits mit geeigneten Vorsprüngen wie Zapfen oder membranähnlichen Flächengebilden versehen sein, mit denen die Federelemente entweder am Gehäuse oder an der Tilgermasse befestigt werden können, um die Federelemente während des Verformungsvorganges an Ort halten zu können. Auch könnten Gewindemuttern oder Schnüre eingegossen werden, die zur Befestigung mittels Schrauben oder zum Einklemmen geeignet sind.

Die Aufteilung in ein Federelement, das materialmässig bezüglich guter Tilgereigenschaften ausgewählt werden kann, und in eine Umhüllung, die bezüglich der Widerstandsfähigkeit gegenüber Schmiermitteln und mechanischem Abrieb ausgewählt werden kann, hat überdies noch den Vorteil, dass die Form des Federelementes in weiten Grenzen frei wählbar ist, sofern sie eine überproportionale Kraft-Weg-Charakteristik aufweist.

Für diese Federelemente sind somit Kugeln, Ringe oder Rohre denkbar. Zur Verbesserung des angestrebten Verhaltens können auch die Prallflächen einerseits des vibrierenden Körpers und anderseits der Tilgermasse herangezogen werden, um die Berührung punkt- oder linienförmig oder flächenhaft zu gestalten.

Die Umhüllung muss nicht eng an das Federelement anschmiegend ausgebildet sein, sondern sie kann das Federelement lose umfassen ; wichtig bei dieser Umhüllung ist nur, dass das Federelement vollständig eingeschlossen oder gegenüber den zerstörenden Einflüssen abgekapselt ist.

Ausführungsbeispiele der Erfindung werden nachfolgend anhand der Zeichnung erläutert. Es zeigen :

Fig. 1 eine Querschnittansicht durch einen Schwingungstilger in einer ersten Ausführungsform,

Fig. 2A bis Fig. 2C Querschnittsansichten zur Darstellung verschiedener Varianten Von Führungen der Tilgermasse,

Fig. 3 eine Querschnittsansicht zur Darstellung einer anderen Anordnung von Federelementen,

Fig. 4A bis Fig. 4E Schnittansichten verschiedener Federelemente,

Fig. 5A bis Fig. 5C Schnittansichten zur Darstellung unterschiedlicher Berührungsflächen zwischen Prallflächen und Federelementen,

Fig. 6A bis Fig. 6E Schnittansichten durch mit Umhüllungen umfasste Federelemente mit verschieden gestalteten Befestigungsarten an der Umhüllung, und

Fig. 7A bis Fig. 7D Schnittansichten durch mit Umhüllungen umfasste Federelemente zur Darstellung von deren gegegenseitiger Lage.

Vom vibrierenden Körper 10, der ein pneumatisch betätigter Hammer sein kann, ist nur eine hintere Partie mit dem Schwingungstilger 20 dargestellt. Der Körper 10 könnte beispielsweise ein dem Schlagwerkzeug der vorgenannten DE-A 26 06 943 gleichendes Werkzeug sein.

Der Schwingungstilger 20 besteht aus einer in einem Gehäuse 21 untergebrachten Tilgermasse 30 und zwei Federelementen 40 und 50, die einerseits auf Flächen 31, 32 der Tilgermasse 30 und anderseits auf einer Prallfläche 22 des Gehäuses und auf einer Prallfläche 23 des vibrierenden Körpers 10 aufliegen. Die Tilgermasse 30 weist eine Durchgangsbohrung 33 mit Gleithülsen 33a, 33b auf, die auf einem im Gehäuse 20 und im vibrierenden Körper 10 ortsfest gehalterten Führungsstift 24 gleiten.

In diesem Ausführungsbeispiel sind die Federelemente 40, 50 je als eine Kugelfeder 41, 51 ausgebildet, die in eine Umhüllung 42, 52 eingebettet ist. Die Umhüllung 42, 52 ist mit einem angeformten Zapfen 43, 53 versehen, der in einer zweiten Durchgangsbohrung 34 mit einer Stellschraube 35, 36 festgehalten ist.

Die Kugelfedern 41, 51 bestehen aus einem Elastomer, wie Polybutadien, und die Umhüllung 42, 52, die vorzugsweise eine Dicke von höchstens 10 % des Kugeldurchmessers aufweist, besteht aus einem abnützungsfesten und gegen Mineralöle beständigen Chloropren-Kautschuk.

Damit lässt sich für die Kugelfeder das für die Schwingungstilgung am besten geeignete weichelastische Material und für die Umhüllung ein ölbeständiges Material verwenden, so dass optimale Verhältnisse bezüglich Verschleiss und Alterung geschaffen werden können.

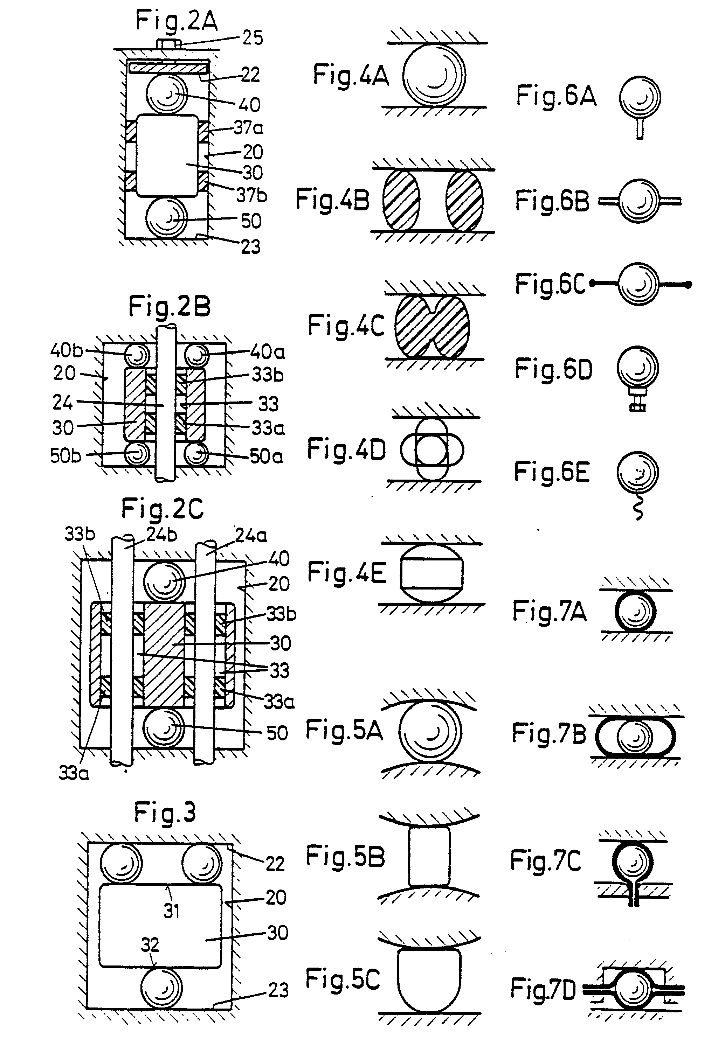

Fig. 2A-Fig. 2C zeigen drei verschiedene Ausführungsformen für die Führung der Tilgermasse 30 im Gehäuse 20. Gemäss Fig. 2A sind zwei Gleitringe 37a, 37b um die Tilgermasse 30 herum angeordnet, die auf der Innenwand des Gehäuses 20 gleiten. Die Federelemente 40, 50 sind andeutungsweise als Kugeln ausgebildet. In dieser Fig. 2A ist überdies die Prallfläche 22 mittels einer Stellschraube 25 gegegenüber der Prallfläche 23 einstellbar angeordnet, um darzustellen, dass dadurch die Federelemente 40, 50 vorgespannt werden können. Eine solche Einstellung kann selbstverständlich bei allen nachfolgend beschriebenen Ausführungsformen vorgesehen sein, ohne dass speziell darauf hingewiesen wird.

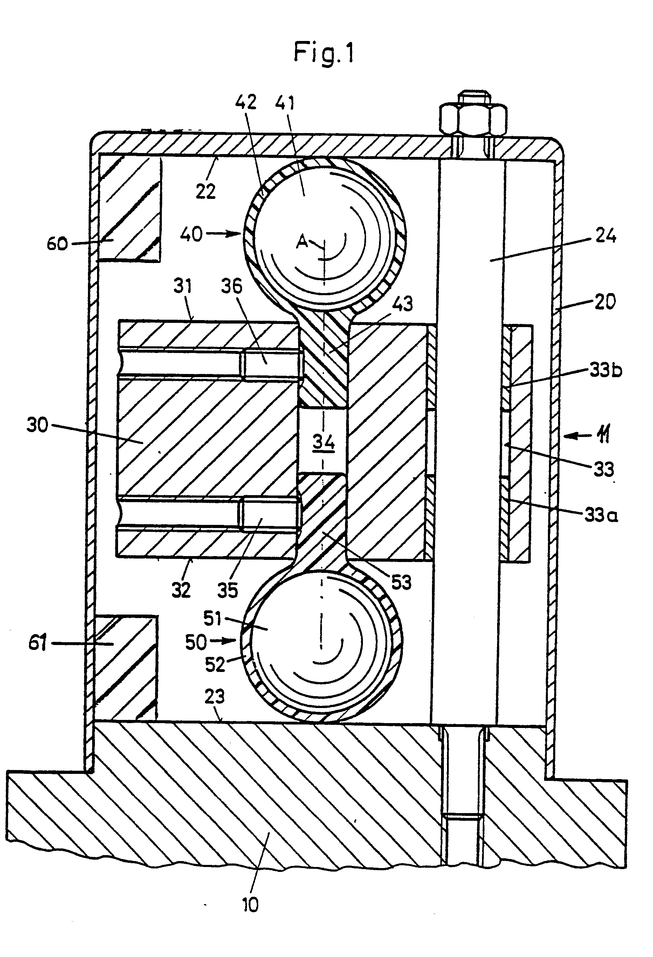

Fig. 2B zeigt demgegenüber einen zentrisch im Gehäuse 20 angeordneten Führungsstift 24 auf, wobei die Durchgangsbohrung 33, die in Fig. 1 ausserhalb der Mittelachse gezeichnet ist, nun auf der Mittelachse der Tilgermasse 30 liegt. Auch hier sind Gleithülsen 33a, 33b vorgesehen. Indem die zentrische Stelle vom Führungsstift 24 eingenommen wird, müssen die Federelemente 40, 50 ausserhalb der Mitte angeordnet sein, wie dies hier durch die Kugelfedern 40a, 40b und 50a, 50b angedeutet ist.

Als letzte dargestellte Variante zur Führung der Tilgermasse 30 zeigt Fig. 2C zwei Führungsstifte 24a, 24b, die je eine Durchgangsbohrung 33 ausserhalb der Mittelachse der Tilgermasse 30 durchdringen und auf Gleithülsen 33a, 33b aufliegen. Wie bei Fig. 1 kann auch hier je eine Kugelfeder 40, 50 zentrisch angeordnet sein.

Gemäss Fig. 3 sind auch eine ungleiche Anzahl von Kugelfedern auf den Prallflächen 22, 23 von Gehäuse 20 und vibrierendem Körper und den Prallflächen 31, 32 der Tilgermasse 30 denkbar. Dies vor allem in Verbindung mit der Führungsanordnung gemäss Fig. 2A.

Die Federelemente 40, 50 können gemäss Fig. 4A-E als Kugeln, als Toroid, als Rotationskörper aus einer Lemniskate als Mehrfachkugelkörper mit beispielsweise sechs in den Richtungen karthesischer Koordinaten oder als Zylinder mit konvex gewölbten Boden- und Deckflächen ausgebildet sein. Wichtig ist nur, dass die Bedingung erfüllt ist, dass die Federelemente eine dem dynamischen Verhalten von kugeligen Körpern entsprechende Gestalt haben. Um die Form der Federelemente noch weiter variieren zu können, lassen sich auch die Prallflächen 22, 23 bzw. 31, 32 entsprechend formen. Fig. 5A zeigt eine Kombination von konvexer und konkaver Fläche, Fig. 5B zwei konvexe Flächen und Fig. 5C eine konvexe und eine ebene Fläche. Die Federelemente können dann aus geraden und gewölbten Flächen zusammengesetzt sein, weil die Wirkung der kugeligen Gestalt mit der Prallfläche erzeugt wird.

Wenn vorgesehen ist, die Federelemente 40, 50 bezüglich des Gehäuses 20 oder bezüglich der Tilgermasse zu fixieren, so geschieht dies vorteilhafterweise durch besondere Ausgestaltung der Umhüllung. So kann die Befestigung mittels eines Zapfens gemäss Fig. 6A an der Tilgermasse 30 oder in den Prallwänden 22, 23 des Gehäuses 20 bzw. des vibrierenden Körpers 10 geschehen, oder es können gemäss Fig. 6B zwei diametral angeordnete Zapfen sein, die entweder in den Seitenwänden des Gehäuses oder in den sich benachbart gegenüberstehenden Prallwänden eingesetzt sein können. Die Umhüllung kann aber auch membranartige Bänder gemäss Fig. 6C bilden, um die Federelemente an den Seitenwänden des Gehäuses aufzuhängen. Weitere Varianten sind gemäss Fig. 6D eine eingegossene Schraubenmutter, um das Federelement mit einer Schraube auf einer Prallfläche anzuschrauben. Eine einfache Halterung liesse sich gemäss Fig. 6E auch durch einen eingegossenen Faden bewerkstelligen.

Schliesslich zeigen Fig. 7A bis Fig. 7E unterschiedliche Ausbildungen von Umhüllungen, die gemäss Fig. 7A satt am Federelement anliegen oder gemäss Fig. 7B dieses lose umfassen können. Auch könnte anstelle eines massiven Zapfens gemäss Fig. 7C die Umhüllung als Flächengebilde ausgeführt und in Form eines Wurstendes in eine Bohrung hineingepresst sein. Unter Verwendung von zwei Flächengebilden gemäss Fig. 7D lässt sich eine ähnliche Befestigung des Federelementes wie in Fig. 6C erreichen, nur dass hier das Federelement frei beweglich gehaltert ist.

Während nun verschiedene Anordnungen einzeln mit Bezug auf die Form des Federelementes, die Form der Prallflächen, die Art der Befestigung und die Ausbildung der Umhüllung dargestellt und erklärt wurden, ist es selbstverständlich, dass auch beliebige sinnvolle Kombinationen von diesen Anregungen ausgehend herstellbar sind.

## Patentansprüche

1. Schwingungstilger mit einer Tilgermasse (30), die mit zwei zur Schwingachse symmetrisch ausgebildeten Federelementen (40, 50 ; 40a, 40b ; 50a, 50b) an zwei sich in Schwingungsrichtung gegenüberliegenden Flächen (22, 23) eines einen Hohlraum für die Aufnahme der Tilgermasse (30) bildenden zylindrischen Gehäuses (20) abgestützt ist, wobei die Federelemente (40, 50 ; 40a, 40b ; 50a, 50b) aus einem Elastomer mit geringer dynamischer Eigendämpfung und/oder mit hoher Rückprallelastizität bestehen und eine Form haben, die eine überproportionale Kraft-Weg-Charakteristik bewirkt und je aus einem Kern (41, 51), der die Federeigenschaften aufweist und einer geschlossenen Umhüllung (42, 52) zum Schutz des Kerns gegen mechanische und/oder chemische Einflüsse bestehen, und bei welchem Schwingungstilger im Gehäuse (20) eine axiale Führung (24, 24a, 24b ; 33, 33a, 33b ; 37a, 37b) für die Tilgermasse (30) mit geringer Reibung vorgesehen ist.

2. Schwingungstilger nach Patentanspruch 1, dadurch gekennzeichnet, dass das Elastomer Polybutadien ist.

3. Schwingungstilger nach Patentanspruch 1, dadurch gekennzeichnet, dass die Tilgermasse (30) durch die Federelemente (40, 50 ; 40a, 40b ; 50a, 50b, Fig. 3) in Ruhelage zentriert ist.

4. Schwingungstilger nach Patentanspruch 1, dadurch gekennzeichnet, dass die Umhüllung (42, 52) am Gehäuse (20) befestigt ist.

5. Schwingungstilger nach Patentanspruch 1, dadurch gekennzeichnet, dass die Umhüllung (42, 52) an der Tilgermasse (30) befestigt ist.

6. Schwingungstilger nach Patentanspruch 1, dadurch gekennzeichnet, dass die Umhüllung (42, 52) mit einem zapfenförmigen Fortsatz (43, 53) zum Eingriff in eine Bohrung (34) in der Tilgermasse (30) versehen ist, und dass die Tilgermasse (30) Mittel (35, 36) zur Klemmhalterung des Fortsatzes aufweist.

7. Schwingungstilger nach Patentanspruch 1, dadurch gekennzeichnet, dass die Federelemente (40, 50) in Form eines Torus (Fig. 4B), von dem die Rotationsachse auf der Schwingachse des Schwingkörpers liegt, ausgebildet sind.

8. Schwingungstilger nach Patentanspruch 7, dadurch gekennzeichnet, dass der Torus mittels der Umhüllung am Gehäuse (20) befestigt ist.

9. Schwingungstilger nach Patentanspruch 7, dadurch gekennzeichnet, dass der Torus mittels der Umhüllung an der Tilgermasse (30) befestigt ist.

10. Schwingungstilger nach Patentanspruch 1, dadurch gekennzeichnet, dass die Umhüllung aus Chloropren-Kautschuk besteht.

11. Schwingungstilger nach einem der Patentansprüche 1 bis 10, dadurch gekennzeichnet, dass zwischen den Prallflächen (22, 23) von Gehäuse (21) und vibrierendem Körper (10) einerseits und den Prallflächen (31, 32) der Tilgermasse (30) Mittel (60, 61) zur Begrenzung des Schwingungsweges der Tilgermasse (30) vorhanden sind.

12. Schwingungstilger nach Patentanspruch 11, dadurch gekennzeichnet, dass die genannten Mittel (60, 61) elastische Puffer sind.

13. Verwendung des Schwingungstilgers nach Patentanspruch 1 für die Verminderung der auf Hand/Arm des Benützers einwirkenden Vibration bei pneumatisch oder mechanisch angetriebenen Hämmern.

## Claims

1. A vibration absorber comprising an absorber body (30), which is supported by two spring members (40, 50 ; 40a, 40b ; 50a, 50b) constructed symmetrically with respect to the vibration axis against two surfaces (22, 23), lying opposite each other in the vibration direction, of a cylindrical housing (20) forming a cavity for receiving the absorber body (30), the spring members (40, 50 ; 40a, 40b ; 50a, 50b) consisting of an elastomer with low dynamic self-damping and/or with high rebound elasticity and having a form, which effects an overproportional force/path characteristic, and each consisting of a core (41, 51) comprising the spring characteristics and a closed jacket (42, 52) to protect the core against mechanical and/or chemical influences, and in which vibration absorber an axial guide (24, 24a, 24b ; 33, 33a, 33b ; 37a, 37b) is provided in the housing (20) for the absorber body (30) with low friction.

2. A vibration absorber according to claim 1, characterized in that the elastomer is polybutadiene.

3. A vibration absorber according to claim 1, characterized in that the absorber body (30) is centred by the spring members (40, 50 ; 40a, 40b ; 50a, 50b, Fig. 3) in the rest position.

4. A vibration absorber according to claim 1, characterized in that the jacket (42, 52) is fastened to the housing (20).

5. A vibration absorber according to claim 1, characterized in that the jacket (42, 52) is fastened to the absorber body (30).

6. A vibration absorber according to claim 1, characterized in that the jacket (42, 52) is provided with a peg-shaped extension (43, 53) for engagement in a bore (34) in the absorber body (30), and in that the absorber body (30) comprises means (35, 36) of clamping the extension in position.

7. A vibration absorber according to claim 1, characterized in that the spring members (40, 50) are constructed in the form of a torus (Fig. 4B), the axis of rotation of which lies on the vibration axis of the vibration body.

8. A vibration absorber according to claim 7, characterized in that the torus is fastened by means of the jacket to the housing (20).

9. A vibration absorber according to claim 7, characterized in that the torus is fastened by means of the jacket to the absorber body (30).

10. A vibration absorber according to claim 1, characterized in that the jacket consists of polychloroprene.

11. A vibration absorber according to any one of claims 1 to 10, characterized in that between the deflecting surfaces (22, 23) of housing (21) and vibrating body (10) on the one hand and the deflecting surfaces (31, 32) of the absorber body (30) means (60, 61) are provided to restrict the vibration path of the absorber body (30).

12. A vibration absorber according to claim 11, characterized in that the above-mentioned means (60, 61) are elastic buffers.

13. The use of the vibration absorber according to claim 1, for reducing the vibration acting on the hand/arm of the user of pneumatically or mechanically driven hammers.

**Revendications**

1. Annulateur de vibrations comprenant une masse d'annulation (30) qui prend appui, par l'intermédiaire de deux éléments à ressort (40, 50 ; 40a, 40b ; 50a, 50b) réalisés symétriquement par rapport à l'axe de vibration, sur deux surfaces (22, 23), opposées dans la direction de vibration, d'un boîtier cylindrique (20) délimitant une cavité pour recevoir la masse d'annulation (30), les éléments à ressort (40, 50 ; 40a, 40b ; 50a, 50b) étant faits d'un élastomère à faible auto-amortissement dynamique et/ou à élasticité de rebondissement élevée et ayant une forme qui donne lieu à une caractéristique force-déplacement surproportionnelle, chacun de ces éléments à ressort étant constitué par un noyau (41, 51) qui présente les caractéristiques de ressort et par une enveloppe fermée (42, 52) destinée à protéger le noyau contre les influences mécaniques et/ou chimiques, un guide axial (24, 24a, 24b ; 33, 33a, 33b ; 37a, 37b) étant prévu dans le boîtier (20) de cet annulateur de vibrations pour guider la masse d'annulation (30) avec un faible frottement.

2. Annulateur de vibrations selon la revendication 1, caractérisé en ce que l'élastomère est un polybutadiène.

3. Annulateur de vibrations selon la revendication 1, caractérisé en ce qu'en position de repos, la masse d'annulation (30) est centrée par les éléments à ressort (40, 50 ; 40a, 40b ; 50a, 50b ; fig. 3).

4. Annulateur de vibrations selon la revendication 1, caractérisé en ce que l'enveloppe (42, 52) est fixée au boîtier (20).

5. Annulateur de vibrations selon la revendication 1, caractérisé en ce que l'enveloppe (42, 52) est fixée à la masse d'annulation (30).

6. Annulateur de vibrations selon la revendication 1, caractérisé en ce que l'enveloppe (42, 52) est munie d'un appendice en forme de tenon (43, 53) destiné à être inséré dans une forure (34) pratiquée dans la masse d'annulation (30) et en ce que la masse d'annulation (30) comporte des moyens (35, 36) pour retenir l'appendice par serrage.

7. Annulateur de vibrations selon la revendication 1, caractérisé en ce que les éléments à ressort (40, 50) sont réalisés sous la forme d'un tore (fig. 4B) dont l'axe de révolution coïncide avec l'axe de vibration du corps vibrant.

8. Annulateur de vibrations selon la revendication 7, caractérisé en ce que le tore est fixé au boîtier (20) au moyen de l'enveloppe.

9. Annulateur de vibrations selon la revendication 7, caractérisé en ce que le tore est fixé à la masse d'annulation (30) au moyen de l'"enveloppe.

10. Annulateur de vibrations selon la revendication 1, caractérisé en ce que l'enveloppe est faite de caoutchouc chloroprène.

11. Annulateur de vibrations selon l'une quelconque des revendications 1 à 10, caractérisé en ce qu'il est prévu, entre les surfaces de rebondissement (22, 23) du boîtier (21) et du corps vibrant (10) d'une part et les surfaces de rebondissement (31, 32) de la masse d'annulation (30) d'autre part, des moyens (60, 61) pour limiter la course d'oscillation de la masse d'annulation (30).

12. Annulateur de vibrations selon la revendication 11, caractérisé en ce que lesdits moyens (60, 61) sont des tampons élastiques.

13. Utilisation de l'annulateur de vibrations selon la revendication 1 pour diminuer, dans des marteaux à commande pneumatique ou mécanique, les vibrations transmises à la main et au bras de l'utilisateur.

## Fig.1

Fig.2A
25
22
40
37a
20
30
37b
50
23

Fig.2B
40b
20
24
30
50b
40a
33b
33
33a
50a

Fig.2C
33b 24b 24a
40
20
33b
30
33
33a
50
33a

Fig.3
22
31
20
30
32
23

Fig.4A
Fig.4B
Fig.4C
Fig.4D
Fig.4E
Fig.5A
Fig.5B
Fig.5C

Fig.6A
Fig.6B
Fig.6C
Fig.6D
Fig.6E
Fig.7A
Fig.7B
Fig.7C
Fig.7D

2